# EUROPEAN PATENT SPECIFICATION

(11) **EP 3 155 500 B1**
(45) Date of publication and mention of the grant of the patent: **18.07.2018**
(21) Application number: 15700709.7
(22) Date of filing: 20.01.2015
(51) Int. Cl.: G06F 3/01, G06F 3/16, G06F 17/24, G10L 15/26

(54) **PORTABLE ELECTRONIC EQUIPMENT AND METHOD OF OPERATING A USER INTERFACE**
TRAGBARE ELEKTRONISCHE VORRICHTUNG UND VERFAHREN ZUR BEDIENUNG EINER BENUTZERSCHNITTSTELLE
DISPOSITIF ÉLECTRONIQUE PORTABLE ET PROCÉDÉ DE FONCTIONNEMENT D'UNE INTERFACE UTILISATEUR

(30) Priority: 13.06.2014 US 201414304055
(43) Date of publication of application: 19.04.2017
(73) Proprietor: Sony Corporation, Tokyo 108-0075 (JP)
(72) Inventor: THÖRN, Ola, S-216 12 Limhamn (SE)
(74) Representative: Neusser, Sebastian
(86) International application number: PCT/EP2015/050944
(87) International publication number: WO 2015/188952

(56) References cited:
- WO-A2-2014/057140
- US-B1- 7 881 493
- K. D Vertanen: "Efficient correction interfaces for speech recognition", PhD, University of Cambridge , 30 April 2009 (2009-04-30), XP055186483, Retrieved from the Internet: URL:http://search.proquest.com/docview/898 759842 [retrieved on 2015-04-28]
- J.F. GUITARTE PEREZ ET AL: "Lip Reading for Robust Speech Recognition on Embedded Devices", PROCEEDINGS. (ICASSP '05). IEEE INTERNATIONAL CONFERENCE ON ACOUSTICS, SPEECH, AND SIGNAL PROCESSING, 2005., vol. 1, 23 March 2005 (2005-03-23), pages 473-476, XP055186957, DOI: 10.1109/ICASSP.2005.1415153 ISBN: 978-0-78-038874-1
- SUHM B ET AL: "Multimodal error correction for speech user interfaces", ACM TRANSACTIONS ON COMPUTER-HUMAN INTERACTION, ACM, NEW YORK, NY, US, vol. 8, no. 1, 1 March 2001 (2001-03-01), pages 60-98, XP002506885, ISSN: 1073-0516, DOI: 10.1145/371127.371166

## Description

### FIELD OF THE INVENTION

Embodiments of the invention relate to a portable electronic equipment and to a method of operating a user interface of a portable electronic equipment. Embodiments of the invention relate in particular to portable electronic equipments which are configured to perform a speech to text conversion to generate a text.

### BACKGROUND OF THE INVENTION

Many portable electronic devices have a user interface which allows text to be input and edited. Techniques of inputting text include keyboard based techniques, stenography based techniques, or speech to text conversion. Keyboard based input may be slow on conventional keyboards. Keyboard layouts such as the Dvorak simplified keyboard (DSK) may mitigate such problems to a certain extent.

Speech to text conversion relies on the processing of input signals to convert spoken or uttered speech into text. One advantage of speech to text conversion is that it is convenient for the user and allows text to be input in an intuitive way. Although the accuracy of speech recognition has improved, utterances may still be misinterpreted by a speech to text conversion machine. Adding special characters such as punctuation marks may be cumbersome, because many users are not trained to including special characters in dictation. Misinterpreted words may also propagate throughout the text when the speech to text conversion machine uses word context to increase accuracy.

While such shortcomings may be mitigated by editing the text using a keyboard once the speech to text conversion has been completed, such a correction process may be slow and may reduce the convenience of using the user interface. For illustration, a cursor may have to be positioned manually via the keyboard before the text editing may be performed.

K.D. Vertanen, "Efficient correction interfaces for speech recognition" discloses an electronic equipment and a method according to the preambles of independent claims 1 and 12.

US 7 881 493 B1 discloses eyetracking techniques and analysis techniques. At least one interpretation of eyetracking data is received from an eye interpretation engine. A characteristic of a graphical user interface of an application is dynamically modified based on the interpretation of the eyetracking data. A portion of the application being viewed by a user may be determined. The determined portion may be modified in response to the interpretation of the eyetracking data for the user.

WO 2014/057140 A2 discloses a speech-to-text input method. The method comprises receiving a speech input from a user, converting the speech input into text through speech recognition, displaying the recognized text to the user, determining a gaze position of the user on a display by way of tracking the eye movement of the user, displaying an edit cursor at said gaze position when said gaze position is located at the displayed text, receiving a speech edit command from the user, recognizing the speech edit command through speech recognition, and editing said text at said edit cursor according to the recognized speech edit command.

J.F. Guitarte Perez et al., "Lip reading for robust speech recognition on embedded devices" discloses an audio-visual speech recognition system suitable for embedded devices. In particular, it is recognized that in certain background noise scenarios, lip reading outperforms speech recognition results obtained with conventional noise reduction technologies.

### SUMMARY

There is a need in the art for a portable electronic equipment and a method of operating a user interface of a portable electronic equipment which mitigate at least some of these shortcomings. There is in particular a need in the art for a portable electronic equipment and a method of operating a user interface of a portable electronic equipment in which text generated by speech to text conversion can be edited more easily and in a more intuitive way.

According to the invention, a portable electronic equipment as defined in independent claim 1 and a method as defined in independent claim 12 of operating a user interface of a portable electronic equipment are provided. The dependent claims define preferred and/or advantageous embodiments of the invention.

According to embodiments of the invention, an electronic equipment combines speech to text conversion for generating text from spoken utterances with eye gaze control of a text editing function. The electronic equipment according to embodiments may be configured such that a text editing function may be activated selectively for a portion of the generated text by eye gaze control. The electronic equipment according to embodiments may be configured such that a speech to text conversion module may automatically determine which portions of a text are likely to be edited. The eye gaze based control may allow a text editing function to be selectively activated for the portions of the text which the speech to text conversion module identifies as candidates for a text editing.

A gaze tracking device of the portable electronic equipment which is configured to track a eye gaze direction may comprise a video camera which is arranged to face the user when the portable electronic equipment is in use. An example for such a video camera is the low-resolution video camera of a portable telephone. By using the video camera for gaze tracking, no separate, dedicated gaze tracking sensor must be provided.

A portable electronic equipment according to an embodiment comprises a speech to text conversion module configured to generate a text by performing a speech to text conversion. The portable electronic equipment comprises a gaze tracking device configured to track an eye gaze direction of a user on a display on which the text is displayed. The portable electronic equipment is configured to selectively activate a text editing function based on the tracked eye gaze direction.

The portable electronic equipment may be configured to assign a numerical value to each one of several portions of the text based on the speech to text conversion. The portable electronic equipment may be configured to selectively activate the text editing function for editing a portion of the text selected from the several portions. The portion for which the text editing function is activated may be determined based on the assigned numerical values and based on the tracked eye gaze direction.

The numerical value may represent a probability assigned to a word and/or interword space.

The numerical value may represent a probability, determined based on the text to speech conversion, that editing of the text is required at the respective location. The numerical value may be used to define sizes of activation areas for eye gaze based activation of gaze tracking.

The portable electronic equipment may be configured to adapt the way in which the tracked eye gaze direction affects the text editing function in dependence on the numerical values assigned to words and/or interword spaces.

The numerical values may indicate a probability that a word has been misinterpreted and/or that a special character is to be inserted at an interword space.

The portable electronic equipment may be configured to use the numerical values to define at least one activation area on the display which is associated with at least one of a word or an interword space. The text editing function may be selectively activated for correcting a word or for inserting a special character at an interword space based on the eye gaze direction. A dwell time of the eye gaze direction on an activation area may trigger execution of the text editing function for correcting the respective word or adding a special character at the respective interword space.

The portable electronic equipment may be configured to determine the portion for which the text editing function is activated based on the assigned numerical values and based on a heat map for the eye gaze direction. The fast changes in eye gaze direction may be processed by generating the heat map and associating the heat map with regions on the display for which the numerical values indicate that a word may have been misinterpreted by the speech to text conversion module and/or that a special character is likely to be inserted.

The portable electronic equipment may be configured to assign the numerical value to respectively each one of several words of the text based on a speech to text conversion accuracy. The speech to text conversion accuracy may represent a likelihood that a spoken utterance has been misinterpreted by the speech to text conversion. The speech to text conversion module may be configured to determine the likelihood based on whether the spoken utterance can be uniquely assigned to a word included in a dictionary of the portable electronic equipment. The speech to text conversion module may be configured to determine the likelihood based on whether there are plural candidate words in the dictionary to which the spoken utterance could be assigned.

The portable electronic equipment may be configured such that a dwell time of the monitored eye gaze direction on an activation area associated with a word triggers the text editing function for editing the word. The portable electronic equipment may be configured to set a size of the activation area in dependence on the speech to text conversion accuracy. A word for which the speech to text conversion module determines that a misinterpretation is more likely may be assigned a greater activation area. A word for which the speech to text conversion module determines that the recognition quality is good may be assigned no activation area at all or only a small activation area for activating the text editing function by eye gaze.

The word to which an activation area may be a sequence of characters which does not correspond to a word included in a dictionary of the portable electronic equipment. The word may be a sequence of characters which is a fragment of a dictionary word of the portable electronic equipment.

The portable electronic equipment may be configured such that the text editing function allows the user to perform the text editing by eye gaze control. The text editing function may offer several alternative words from which the user may select one word by using his eye gaze direction. The correct word may be selected in an intuitive way by simply gazing at it.

The portable electronic equipment may be configured such that the activation area for activating the text editing function for a word covers the pixels on which the word is displayed on the display and an area surrounding the pixels on which the word is displayed on the display. The activation area may be dimensioned in accordance with a resolution of the eye gaze tracking device. The text editing function may be reliably activated even with an eye gaze tracking device which uses a low resolution camera, e.g. a video camera of a mobile communication terminal, because the size of the activation area may be adjusted to the resolution of the camera.

Alternatively or additionally to assigning numerical values to words based on the likelihood of a misinterpretation, the portable electronic equipment may be configured to assign the numerical value to respectively each one of several interword spaces.

The numerical value may indicate at which ones of the several interword spaces a punctuation mark is expected to be located. An interword space for which the speech to text conversion module expects that a punctuation mark should be inserted may be assigned a different numerical value than another interword space for which the speech to text conversion machine expects that no punctuation mark should be inserted.

The portable electronic equipment may be configured such that a dwell time of the monitored eye gaze direction on an activation area associated with an interword space triggers the text editing function for editing the interword space.

The portable electronic equipment is configured to set a size of the activation area in dependence on a likelihood that a special character is to be inserted at the interword space.

The portable electronic equipment may be configured to set the size of the activation area such that the size of the activation area is larger than the interword space.

The gaze tracking device may comprise a camera. The camera may be a video camera of a terminal of a cellular communication network.

The speech to text conversion module may be coupled to the camera and may be configured to generate the text by speech to text conversion based on images captured by the camera. The camera may thereby be used for both the speech to text conversion which uses lip movements as input and the eye gaze based activation of the text editing function.

Alternatively or additionally, the portable electronic equipment may comprise a microphone or an Electromyography (EMG) sensor configured to capture speech signals. The speech to text conversion module may be coupled to the microphone and/or the EMG sensor and may be configured to generate the text by speech to text conversion of the captured speech signals.

The portable electronic equipment may be configured to selectively activate the gaze tracking device in response to an error detection performed by the speech to text conversion module. The gaze tracking device may be triggered to track the eye gaze direction when the speech to text conversion module detects a pre-determined number of misinterpretations or of words which do not correspond to dictionary words.

The portable electronic equipment may be configured to activate the gaze tracking device independently of an error detection performed by the speech to text conversion module.

The portable electronic equipment may be configured to determine based on the tracked eye gaze direction whether the text editing function is activated for inserting only one word or whether the text editing function is activated for inserting a plurality of words.

The portable electronic equipment may comprise a wireless interface configured for communication with a cellular communication network.

The portable electronic equipment may be a terminal of a cellular communication network.

The portable electronic equipment may be a handheld device. The speech to text conversion module and the eye gaze tracking device may both be integrated in a housing of the handheld device.

The portable electronic equipment may comprise a handheld device which includes the speech to text conversion module and a wearable device, in particular a head mounted device, which comprises the gaze tracking device.

A method of operating a user interface of a portable electronic equipment comprises performing, by a speech to text conversion module, a speech to text conversion to generate a text. The method comprises tracking, by a gaze tracking device, an eye gaze direction of a user on a display on which the text is displayed. The method comprises selectively activating a text editing function based on the tracked eye gaze direction to allow the user to edit the text.

The method may further comprise assigning a numerical value to each one of several portions of the text based on the speech to text conversion. The text editing function may be selectively activated for editing a portion which is determined based on the assigned numerical values and based on the tracked eye gaze direction.

The numerical value may be assigned to respectively each one of several words of the text based on a speech to text conversion accuracy.

The method may further comprise setting a size of an activation area associated with a word in dependence on a speech to text conversion accuracy. The text editing function may be selectively activated for editing the word based on a dwell time of the tracked eye gaze direction on the activation area.

Alternatively or additionally, the numerical value may be assigned to respectively each one of several interword spaces of the text.

The method may further comprise setting a size of an activation area associated with an interword space in dependence on a likelihood that a special character is to be inserted at the interword space. The text editing function may be selectively activated for editing the word based on a dwell time of the tracked eye gaze direction on the activation area.

The method may comprise selectively activating the gaze tracking device in response to an error detection performed by the speech to text conversion module. The gaze tracking device may be triggered to track the eye gaze direction when the speech to text conversion module detects a pre-determined number of misinterpretations or of words which do not correspond to dictionary words.

The method may comprise activating the gaze tracking device independently of an error detection performed by the speech to text conversion module.

The method may comprise determining, based on the tracked eye gaze direction, whether the text editing function is activated for inserting only one word or whether the text editing function is activated for inserting a plurality of words.

The method may be automatically performed by a portable electronic equipment according to an embodiment.

Portable electronic equipments and methods of operating a user interface of a portable electronic equipment according to exemplary embodiments may be used for activating a text editing function and, optionally, controlling the text editing function after activation by eye gaze direction to correct text generated by speech to text conversion.

It is to be understood that the features mentioned above and features yet to be explained below can be used not only in the respective combinations indicated, but also in other combinations or in isolation, without departing from the scope of the present invention. Features of the above-mentioned aspects and embodiments may be combined with each other in other embodiments.

### BRIEF DESCRIPTION OF THE DRAWINGS

The foregoing and additional features and advantages of the invention will become apparent from the following detailed description when read in conjunction with the accompanying drawings, in which like reference numerals refer to like elements.
FIG. 1 is a front view of a portable electronic equipment according to an embodiment.
FIG. 2 is a schematic block diagram of the portable electronic equipment of FIG. 1.
FIG. 3 is a flow chart of a method according to an embodiment.
FIG. 4 is a view illustrating operation of a portable electronic equipment according to an embodiment.
FIG. 5 is a view illustrating operation of a portable electronic equipment according to an embodiment.
FIG. 6 is a flow chart of a method according to an embodiment.
FIG. 7 illustrates activation areas defined by the portable electronic equipment according to an embodiment.
FIG. 8 illustrates an eye gaze direction determined by the portable electronic equipment, from which the heat map is computed.
FIG. 9 is a schematic block diagram of a portable electronic equipment according to another embodiment.
FIG. 10 is a schematic block diagram of a portable electronic equipment according to another embodiment.
FIG. 11 is a view of a portable electronic equipment according to another embodiment.
FIG. 12 is a functional block diagram representation of a portable electronic equipment according to an embodiment.
FIG. 13 is a flow chart of a method performed by a portable electronic equipment according to an embodiment.
FIG. 14 is a flow chart of a method performed by a portable electronic equipment according to an embodiment.
FIG. 15 is a view illustrating operation of a portable electronic equipment according to an embodiment.
FIG. 16 is a view illustrating operation of a portable electronic equipment according to an embodiment.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations, and elements illustrated in the drawings are not necessarily shown to scale. Rather, the various elements are represented such that their function and general purpose become apparent to a person skilled in the art. Any connection or coupling between functional blocks, devices, components or other physical or functional units shown in the drawings or described herein may also be implemented by an indirect connection or coupling.

The features of the various embodiments may be combined with each other, unless specifically noted otherwise.

A portable electronic equipment and methods of operating a user interface of a portable electronic equipment will be described. The portable electronic equipment comprises a speech to text conversion module. The speech to text conversion module may determine a textual representation of a spoken utterance. The speech to text conversion module may generate a text which comprises a plurality of words, which do not necessarily need to be dictionary words of the portable electronic equipment.

In order to allow a user to edit text generated by speech to text conversion in an intuitive way, the portable electronic equipment includes a gaze tracking device. A text editing function may be activated by eye gaze. For illustration, the gaze tracking device may be configured to determine the dwell time of a user's eye gaze on an activation area. When the dwell time exceeds a threshold, this triggers execution of the text editing function. The text editing function may allow a user to select an alternative spelling for a word provided by the speech to text conversion module if the user's eye gaze direction dwells on the respective word. The text editing function may alternatively or additionally allow a user to enter a special character at an interword space if the if the user's eye gaze direction dwells on the respective interword space.

The gaze tracking device may be a video camera comprising an image sensor. The gaze tracking device may alternatively or additionally comprise a sensor which is sensitive in the infrared spectral range to detect the eye gaze direction using infrared probe beams. The portable electronic equipment may be configured to determine an eye gaze direction by determining a gaze point on a display of the portable electronic equipment, for example.

The portable electronic equipment is configured to combine speech to text conversion which provides an intuitive text inputting method with eye gaze activation of a text editing function. The portable electronic equipment may use an output of the speech to text conversion module to determine whether eye gaze based activation of the text editing function shall be available for editing a word and/or an interword space. For illustration, when the speech to text conversion module determines that a spoken utterance has been converted into a textual representation of a word with a low risk of misinterpretation, the portable electronic equipment may not allow the user to activate the text editing function for this particular word based on eye gaze. Alternatively, the dwell time which triggers activation of the text editing function for editing a word may be longer if the text recognition accuracy is determined to be good.

As will be explained in more detail, the portable electronic equipments and methods of embodiments allow text editing to be performed under eye gaze control. The text editing function may be activated by eye gaze while the speech to text conversion is still in progress and/or after the speech to text conversion has been completed.

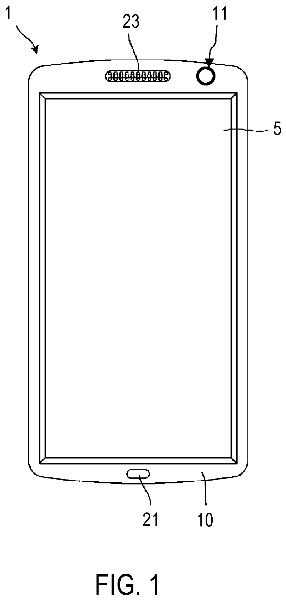

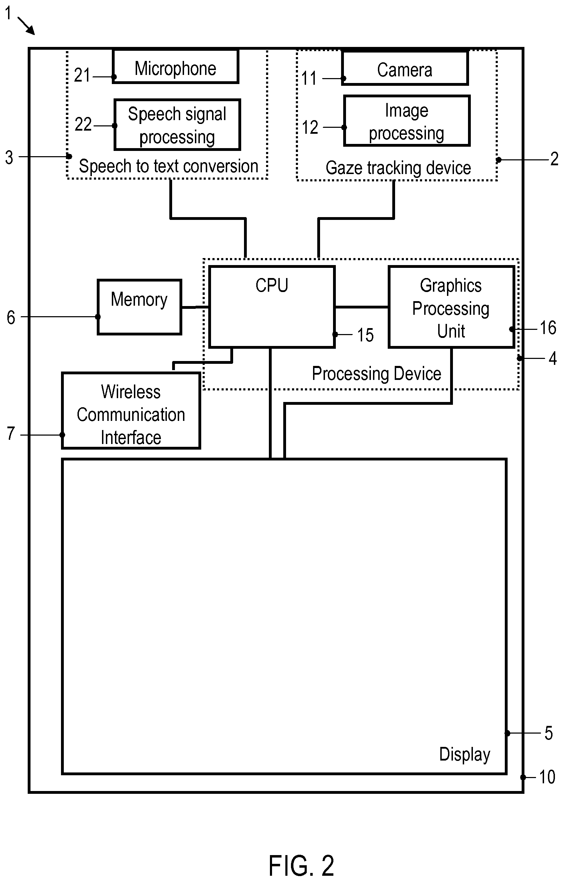

FIG. 1 is a front view of a portable electronic equipment 1 and FIG. 2 is a schematic block diagram representation of the portable electronic equipment 1.

The portable electronic equipment 1 comprises a gaze tracking device 2. The gaze tracking device 2 may comprise a camera 11. The camera 11 may be configured as a video camera facing the user. The eye position in the images captured by the camera 11 may be processed by an image processing module 12 to determine a gaze direction. The portable electronic equipment 1 comprises a speech to text conversion module 3. The speech to text conversion module 3 may comprise a microphone 21 and a speech signal processing circuit 22. The microphone 21 may be the microphone of the portable electronic equipment 1 used for voice communication over a cellular communication network, for example. Other sensors may be used to capture speech signals which serve as input signals for speech to text conversion. For illustration, the speech to text conversion module 3 may comprise an Electromyography (EMG) sensor and/or a camera for capturing speech signals which are converted into textual representations of words. The portable electronic equipment 1 comprises a display 5 on which the text generated by the speech to text conversion module 3 from speech signals is displayed.

The portable electronic equipment 1 comprises a processing device 4 coupled to the gaze tracking device 2. The processing device 4 may be one processor or may include plural processors, such as a main processor 15 and a graphics processing unit 16. The processing device 4 may have other configurations and may be formed by one or several integrated circuits such as microprocessors, microcontrollers, processors, controllers, or application specific integrated circuits.

The processing device 4 may perform processing and control operations. The processing device 4 may be configured to execute a text editing function which allows the user to edit text generated by speech to text conversion of spoken utterances. The processing device 4 may determine, based on a tracked eye gaze motion, at which word and/or interword space the user gazes. The processing device 4 may activate the text editing function for editing the word and/or interword space for the word or interword space on which the user's eye gaze dwells. The text editing function may be allow a user to select from among several candidate words and/or candidate characters which may be selected depending on which word or interword space the user is gazing at.

The portable electronic equipment 1 may comprise a non-volatile memory 6 or other storage device in which a dictionary and/or grammar rules may be stored. The processing device 4 may be configured to select words from the dictionary and/or special characters when the text editing function is activated by the user's eye gaze.

The portable electronic equipment 1 may be operative as a portable communication device, e.g. a cellular telephone, a personal digital assistant, or similar. The portable electronic equipment 1 may include components for voice communication, which may include the microphone 21, a speaker 23, and the wireless communication interface 7 for communication with a wireless communication network. The portable electronic equipment 1 may be configured as a handheld device. The various components of the portable electronic equipment 1 may be integrated in a housing 10.

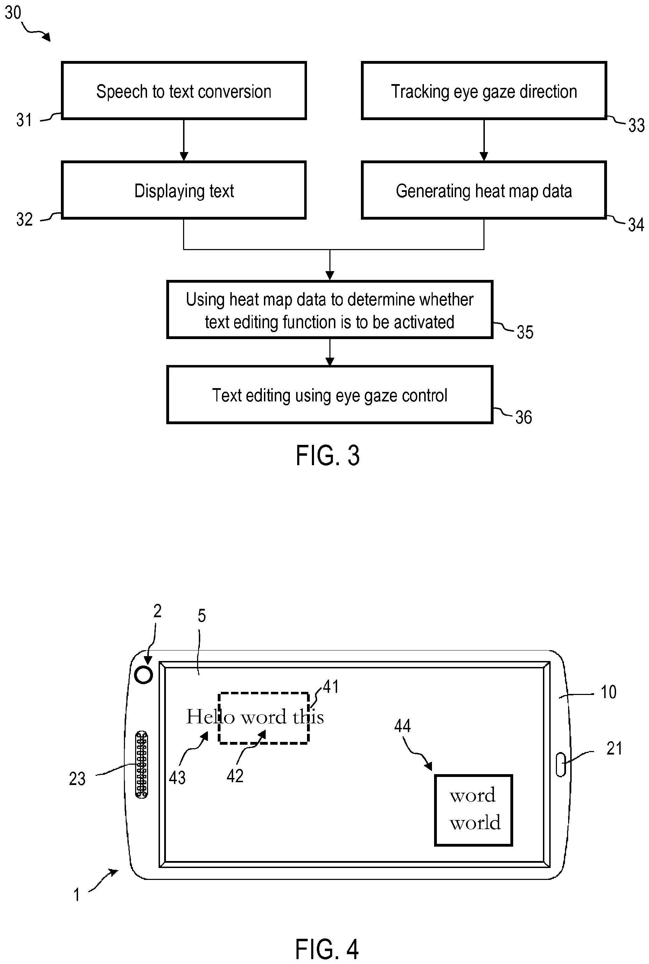

The operation of the portable electronic equipment 1 will be described in more detail with reference to FIGS. 3 to 12 below.

FIG. 3 is a flow chart of a method 30 according to an embodiment. The method 30 may be performed by the portable electronic equipment 1.

At 31, a speech to text conversion is performed to generate a text from speech. The speech to text conversion may use a speech signal captured by a microphone and/or EMG sensor as an input signal. The speech to text conversion may use images captured by a camera as an input signal and may analyze lip movements for determining a textual representation of spoken words. The speech to text conversion may be operative to generate the text even for low-volume or non-audible speech, e.g. by using an output signal of an EMG sensor, of a throat microphone or of a camera as input signal.

At 32, the text generated by the speech to text conversion is displayed on a display of the portable electronic equipment. The text may be updated as new words are recognized.

At 33, gaze tracking is performed to track an eye gaze direction of one eye or both eyes of a user. A gaze tracking device may be started when the speech to text conversion starts or when the portable electronic equipment is started. The gaze tracking device may be started when potential errors are detected in the speech to text conversion. A convergence point of the eye gaze directions of both eyes may be determined. The eye gaze direction may be tracked in a time interval to obtain statistics on preferred gaze directions which the user has been looking at more frequently than other gaze directions. The eye gaze direction may be recorded for a plurality of times in a time interval. The eye gaze direction may be recorded by a gaze tracking device which can fulfill other functions in the portable electronic equipment. For illustration, the gaze tracking device may be a video camera arranged on the same side of the housing 10 as a display 5 so as to point towards the user in operation of the portable electronic equipment 1, as may be desired for video calls.

At 34, heat map data are computed from the information collected by the gaze tracking device. The heat map data may define, for several points or several regions, the fraction of time in the time interval for which the user has been gazing at the respective point or region. A convolution between the points on an eye gaze trajectory and a non-constant spread function f(x, y) may be computed to determine the heat map data, where f(x, y) may be a Gaussian curve, a Lorentz function, or another non-constant function which takes into account that the gaze tracking device has a limited resolution. The heat map data may alternatively be computed by computing, for each one of several pixels on the display 5, the fraction of time for which the user has been gazing at the respective pixel when taking into account the probability spreading caused by the resolution of the gaze tracking device, for example. Various other techniques from the field of gaze tracking may be used to compute the heat map data.

The gaze tracking at 33 and generation of heat map data at 34 may be performed in parallel with the speech to text conversion as illustrated in FIG. 3. In other embodiments, the gaze tracking at 33 may be performed after completion of the speech to text conversion to allow the text editing function to be selectively activated for individual words or interword spaces of a text.

At 35, the heat map data may be used to determine whether the text editing function is to be activated. The heat map data may be used to determine for which word(s) and/or interword space(s) the text editing function is to be activated. The selection of the passage(s) of the text for which the text editing function is to be activated may be performed by the user's eye gaze. Information provided by the speech to text conversion module may be used to define different criteria for activating the text editing function by eye gaze. For illustration, the size of an activation area on which the user's eye gaze must be directed for activating the text editing function for a word or interword space may be set depending on a score which quantifies the likelihood of misinterpretation for the particular word and/or a score which quantifies the likelihood that a punctuation mark or other special character is to be inserted at a particular interword space. Alternatively or additionally, a threshold for a dwell time at which the text editing function is triggered may be set depending on the score which quantifies the likelihood of misinterpretation for the particular word and/or the score which quantifies the likelihood that a punctuation mark or other special character is to be inserted at a particular interword space.

At 36, text editing may be performed. The text editing function may use the user's eye gaze as input. For illustration, several words may be displayed by the text editing function from which the user may select one word for editing the text by his eye gaze. Several special characters may be displayed by the text editing function from which the user may select one special character for editing the text by his eye gaze.

While heat map data may be generated at 34, as described with reference to FIG. 3, the portable electronic equipment according to embodiments does not need to generate heat map data. For illustration, the dwell time on an activation area may be determined without computing heat map data. The text editing function may be triggered based on the eye gaze direction, possibly in combination with dwell times for different gaze points, without computing heat map data.

The portable electronic equipment and method according to an embodiment allows the text editing function to be called up in a simple and intuitive way based on the eye gaze direction. Information on the text provided by the speech to text conversion module may be used to determine onto which areas on the display 5 the user needs to gaze and/or which dwell times must be met in order to trigger execution of the text editing function.

The activation area at which the user must gaze for the text editing function to be triggered may be set to have a larger size if no word matching the spoken utterance has been found in a dictionary and/or if the speech to text module determines that it is likely to have misinterpreted the word. The activation area at which the user must gaze for the text editing function to be triggered may be set to have a smaller size if a word matching the spoken utterance has been found in a dictionary and/or if the speech to text module determines that it is likely to have correctly interpreted the word.

Alternatively or additionally, the dwell time for which the user must gaze an activation area for the text editing function to be triggered may be set to be shorter if no word matching the spoken utterance has been found in a dictionary and/or if the speech to text module determines that it is likely to have misinterpreted the word. The dwell time for which the user must gaze at the activation area for the text editing function to be triggered may be set to have a smaller size if a word matching the spoken utterance has been found in a dictionary and/or if the speech to text module determines that it is likely to have correctly interpreted the word.

A score may be used to quantify whether the speech to text module determines that it is likely to have misinterpreted the word. As used herein, the term "score" refers to a numerical value which is a quantitative indication for a likelihood, e.g. for a likelihood of a spoken utterance being correctly converted into a word or for a likelihood that a special character has to be inserted at an interword space. The size of the activation area and/or the dwell time which triggers execution of the text editing function may respectively be set depending on the score.

The score which may be assigned to each one of several portions of the text, such as words and/or interword spaces, may be used by the portable electronic equipment to adapt how it responds to the tracked eye gaze direction. For illustration, a saliency map may be generated which indicates potentially relevant areas on the display for the text editing function may need to be activated, as determined based on an output of the speech to text conversion module. The response of the portable electronic equipment may be adjusted accordingly. For illustration, areas in which the speech to text conversion module detects possible errors may be made to be more responsive to an activation of the text editing function based on eye gaze.

FIG. 4 is a view illustrating the display 5 of the portable electronic equipment 1. A text is generated by speech to text conversion and is displayed on the display 5. When the portable electronic equipment 1 determines that a word 42 may need to be edited, e.g. because there is an ambiguity in assigning the correct word to the received speech signal, the portable electronic equipment 1 may allow the user to activate a text editing function for editing the word by an eye gaze directed onto the word.

The portable electronic equipment 1 may define an activation area 41 which includes pixels on which the word 42 is displayed. The activation area 41 may be larger than the region in which the word 42 is displayed. This facilitates a selection of the activation area 41 by eye gaze even when the eye gaze direction cannot be determined with high resolution.

The size of the activation area 41 at which the user must gaze may be set in dependence on a score assigned to the word 42. The score may indicate how reliable the speech to text conversion is. For illustration, there may be an ambiguity in converting a speech signal to either one of "word" or "world". The dwell time for which the user's gaze must be directed on the activation area 41 to trigger the activation of the text editing function may also be set depending on the score assigned to the word 42.

The text editing function may also be responsive to the eye gaze direction. For illustration, to edit the word 42, various text strings 44 may be displayed by the text editing function from which the user may select one by using his eye gaze. The selected word may replace the word 42.

An activation of the text editing function by eye gaze may be limited to certain portions of the text only, e.g. to the words for which the speech to text module may have misinterpreted the speech signal. For other words, e.g. for a word 43, the user may still activate the text editing function by manual input actions, for example.

While the activation area 41 is schematically shown by broken lines in FIG. 4, the boundary of the activation area may be displayed, but will generally not be displayed on the display 5.

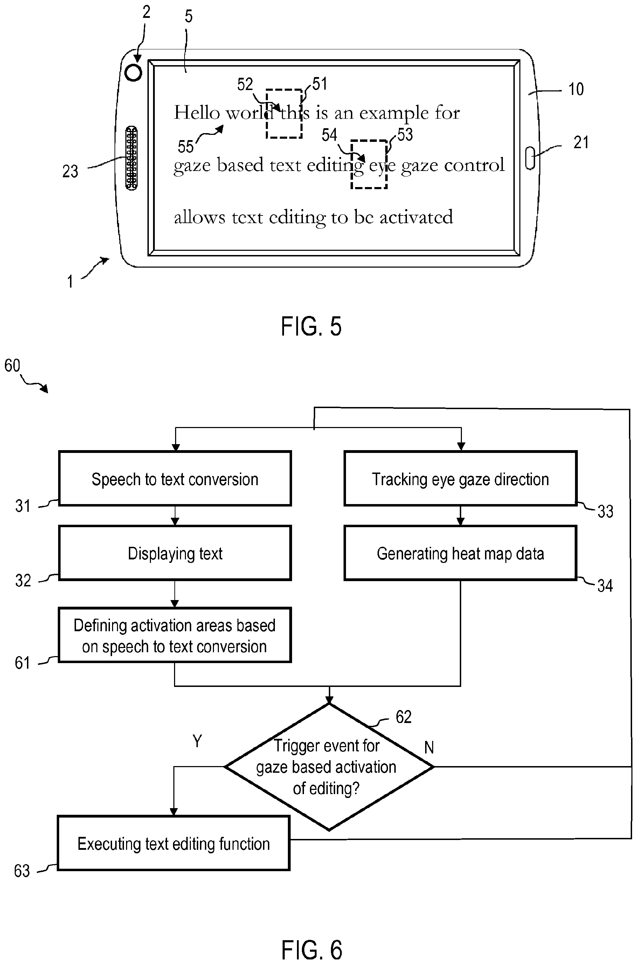

Alternatively or additionally to editing words, the eye gaze based activation of a text editing function may also be used for allowing a user to insert special characters, as illustrated in FIG. 5.

FIG. 5 is a view illustrating the display 5 of the portable electronic equipment 1. A text is generated by speech to text conversion and is displayed on the display 5. When the portable electronic equipment 1 determines that an interword space 52, 54 may need to be edited, e.g. because grammar rules or a modulation of the speech signal indicate that a punctuation mark or other special character may need to be added there, the portable electronic equipment 1 may allow the user to activate a text editing function for editing the interword space 52, 54 by an eye gaze directed onto the interword space 52, 54.

The portable electronic equipment 1 may define an activation area 51, 53 which includes pixels which form the interword space 52, 54 is displayed. The activation area 51, 53 may be larger than the actual interword space and may extend to at least partially cover words adjacent the respective interword space. This facilitates a selection of the activation area 51, 53 by eye gaze even when the eye gaze direction cannot be determined with high resolution.

The size of the activation area 51, 53 at which the user must gaze may be set in dependence on a score assigned to the associated interword space 52, 54. The score may indicate how likely it is, in accordance with grammar rules and/or a modulation of the speech signal, that a special character needs to be added to the interword space. For illustration, the end of a sentence at interword space 54 may be automatically determined based on grammar rules. The dwell time for which the user's gaze must be directed on the activation area 51, 3 to trigger the activation of the text editing function may also be set depending on the score assigned to the respective interword space 52, 53.

The text editing function may also be responsive to the eye gaze direction. For illustration, to edit the interword space 52, 54, various special characters may be displayed by the text editing function from which the user may select one by using his eye gaze. The selected special character may be inserted into the interword space.

An activation of the text editing function by eye gaze may be limited to certain portions of the text only, e.g. to the interword spaces for which it is determined that a punctuation mark or other special character will likely have to be added there. For other interword spaces, e.g. for an interword space 55, the user may still activate the text editing function by manual input actions, for example.

While the activation area 51, 53 is schematically shown by broken lines in FIG. 5, the boundary of the activation area may be displayed, but will generally not be displayed on the display 5.

FIG. 6 is a flow chart of a method 60 according to an embodiment. The method 60 may be performed by the portable electronic equipment according to an embodiment.

In the method 60, activation areas on the display may be defined at 61. The activation areas may be defined in dependence on the speech to text conversion. Activation areas may be defined to be located at words and/or interword spaces where text editing is likely to be required. A score may be assigned to words, with the score indicating a likelihood that the speech to text conversion did not identify the correct word and that text editing may therefore be required. A score may be assigned to interword spaced to indicate a likelihood that a special character must be added at the respective interword space. The size of the activation areas may respectively be set depending on the score. Alternatively or additionally, a dwell time for which a user's eye gaze must be directed onto the activation area associated with a word or interword space for activating the text editing function may be set in dependence on the score.

At 62, it is determined whether a trigger event for activating the text editing function occurs. The text editing function may be activated when the user's eye gaze is directed onto the activation area associated with a word or interword space for at least a dwell time. The dwell time which triggers the execution of the text editing function may be set in dependence on the score associated with the word or interword space. The heat map data may be used to determine whether the eye gaze dwell time is long enough to trigger execution of the text editing function. If the trigger event is not detected, the method may return to steps 31, 33.

At 63, in response to detecting the trigger event at 62, the text editing function may be executed. The text editing function may allow the user to edit the text by eye gaze control.

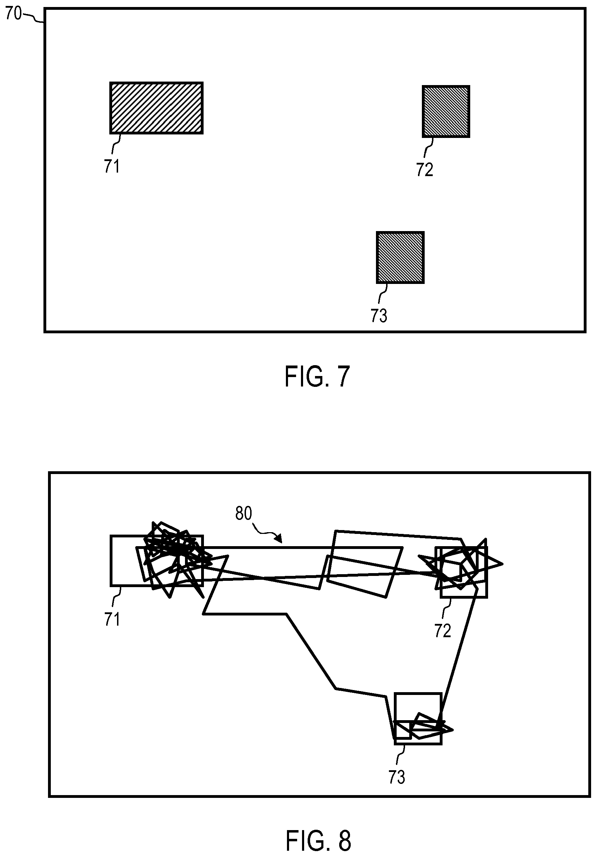

FIG. 7 shows a user interface 70 which may be the display of the portable electronic equipment. The portable electronic equipment uses the output of the speech to text conversion module to define activation areas 71-73 at which the user may direct the eye gaze to activate a text editing functions for a word or interword space. The word or interword space for which the text editing function may be activated by eye gaze may be located below the associated activation area 71-73. The size of one or several of the activation areas 71-73 may be set in dependence on a score of the word or interword space. The gaze dwell time after which the text editing function is triggered may be set in dependence on a score of the word or interword space.

The text editing function may perform different functions for different activation areas 71-73. For an activation area associated with a word, e.g. activation area 71, the user may be allowed to edit the word by selecting from among other candidate words and/or by using textual character input. For an activation area associated with an interword space, e.g. activation areas 72, 73, the text editing function may allow the user to insert a punctuation mark or other special character.

FIG. 8 shows a path 80 of the user's eye gaze direction on the display. The user's eye gaze direction may move rapidly between words at which the user intends to perform a text editing operation and/or interword spaces at which the user intends to perform a text editing operation. In the illustrated example, the gaze dwell time is greatest in the activation area 71. The text editing function may be activated to enable a user to edit the word or interword space associated with the activation area 71.

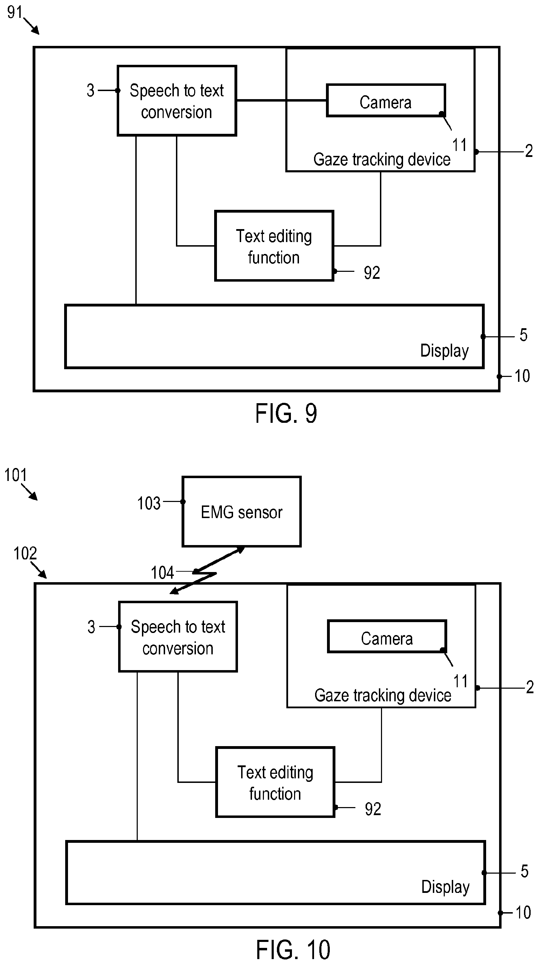

Various modifications of the portable electronic equipment may be implemented in further embodiments, as will be explained in more detail with reference to FIG. 9 to FIG. 11.

FIG. 9 is a block diagram representation of a portable electronic equipment 91 according to an embodiment. The speech to text conversion module 3 is operative to convert speech to text. The speech to text conversion module 3 is connected to the camera 11 and is configured to analyze lip movement in the images captured by the camera 11. Thereby, speech to text conversion may be performed. Both the speech to text conversion module 3 and the gaze tracking device 2 may process the images captured by the camera 11. The speech to text conversion module 3 may identify and analyze lip movement to perform automatic lip reading. The gaze tracking device 2 may analyze at least one eye of the user shown in the images captured by the camera to track an eye gaze direction.

The text editing function 92 can be selectively activated based on the eye gaze direction of the user. The configuration of the text editing function 92, e.g. the portions of the text for which the text editing function 92 may be activated by eye gaze, may be set in dependence on an output of the speech to text conversion module 3. Sizes of areas at which the user may look to activate the text editing function for editing a word or interword space may be adjusted based on a score for the respective word or interword space. The score may quantify the quality of the speech to text conversion and/or the likelihood for insertion of a special character. Alternatively or additionally, the gaze dwell time required for activation of the text editing function may be adjusted in dependence on the score.

The portable electronic equipment 91 may comprise a microphone or other sensor in addition to the camera 11 as an input to the speech to text conversion module. In other embodiments, the speech to text conversion module 91 is not coupled to a microphone.

Additional features and operation of the portable electronic equipment 91 may be implemented as described with reference to FIG. 1 to FIG. 8 above.

FIG. 10 is a block diagram representation of a portable electronic equipment 101 according to an embodiment. The portable electronic equipment 101 comprises an EMG sensor 103. The speech to text conversion module 3 processes speech signals provided by the EMG sensor 103. The EMG sensor 103 may be connected to the speech to text conversion module via a data connection 104, which may be implemented as a wireless communication link or a wired communication link. The EMG sensor 103 may be provided separately from a housing 102 in which the speech to text conversion module and the gaze tracking device are installed.

Additional features and operation of the portable electronic equipment 91 may be implemented as described with reference to FIG. 1 to FIG. 9 above.

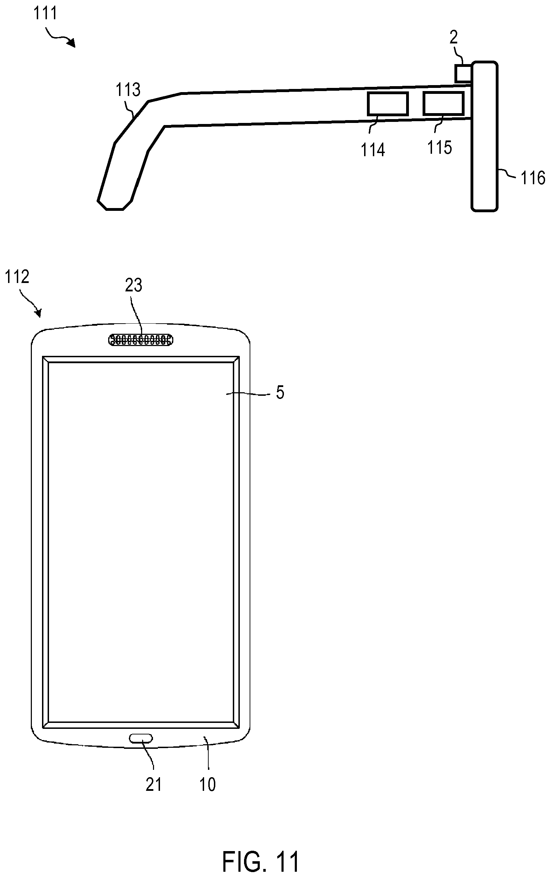

FIG. 11 is a view of a portable electronic equipment 111 according to an embodiment. The portable electronic equipment 111 comprises a handheld device 112 and a wearable device 113 separate from the handheld device 112. The speech to text conversion module and the gaze tracking device may be provided in separate devices in the portable electronic equipment 111. The speech to text conversion module may be installed in the handheld device 112 and may be operative as explained with reference to FIG. 1 to FIG. 9 above.

Text generated by the speech to text conversion module may be displayed at the wearable device 113. The wearable device 113 may in particular be a head mounted device. The wearable device 113 may comprise a display surface at which the text generated by speech to text conversion may be output to the user. The wearable device 113 may receive the text from the speech to text conversion module over an interface 114, which may be a wireless interface. A processing device 115 of the wearable device 113 may selectively activate a text editing function which allows the user to edit the text displayed at the wearable device 113.

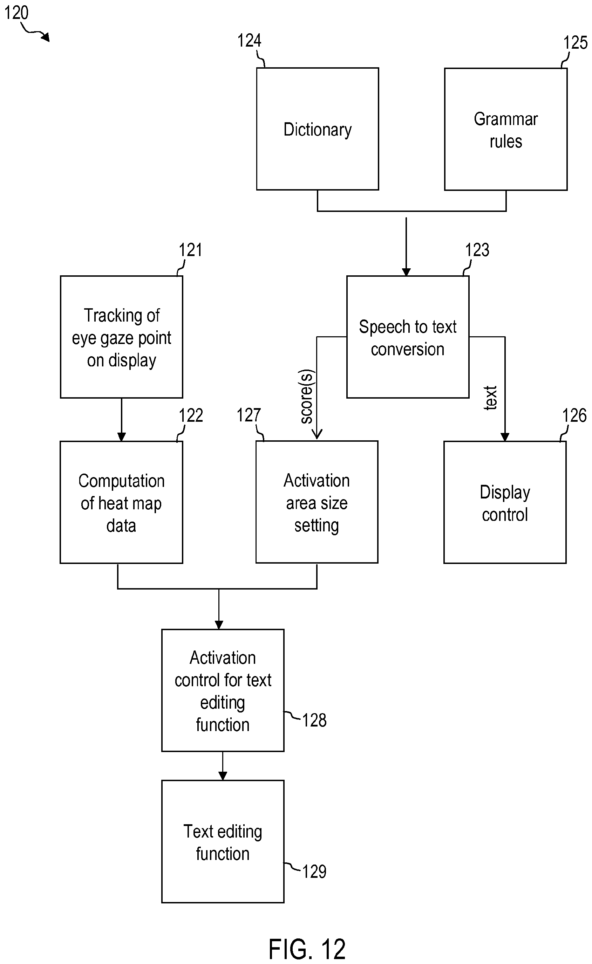

FIG. 12 is a block diagram representation 120 of a portable electronic equipment according to an embodiment. While separate functional blocks are shown in FIG. 12 for greater clarity, several functional blocks may be combined into one physical unit.

The portable electronic equipment has a tracking module 121 for tracking an eye gaze direction on a display. The portable electronic equipment may have an evaluation module 122 for processing the tracked eye gaze direction, e.g. by computing a heat map.

The portable electronic equipment has a speech to text conversion module 123. The speech to text conversion module 123 is operative to convert a speech signal representing a spoken utterance into a textual representation. The speech signal may represent a sound signal captured by a microphone, an electrical signal captured by an EMG sensor, and/or visual data captured by an image sensor. The speech to text conversion module 123 may access a dictionary 124 and/or grammar rules 125 for converting the speech signal into the text. The speech to text conversion module 123 may also be operative to determine a score for words and/or interword spaces of the text. The score may quantify a likelihood for a text editing function to take place. The score may indicate whether a speech signal could not be uniquely assigned to one dictionary word in the dictionary 124. The score for a word may indicate whether the speech to text conversion identified alternative dictionary words which could also be associated with the speech signal. The score for an interword space may indicate a probability for insertion of a punctuation mark or other special character.

The portable electronic equipment may comprise a display control 126. The display control 126 may control a display to output the text generated by the speech to text conversion module 123.

The portable electronic equipment may comprise a setting module 127 for setting sizes and positions of activation areas at which the user must gaze to activate the text editing function. The setting module 127 may optionally set the sizes of the activation areas in dependence on the score associated with a word or interword space, respectively.

The portable electronic equipment may comprise an activation module 128 which controls activation of a text editing function. The activation module 128 may be triggered to activate the text editing function based on the tracked eye gaze direction. The activation module 128 may activate the text editing function for editing a word or interword space if the heat map data indicates that a dwell time of the user's gaze exceeds a threshold. The threshold may optionally depend on the score assigned to the respective word or interword space.

The portable electronic equipment comprises a text editing function 129 which allows a user to edit the text generated by the speech to text conversion module 123. The text editing function 129 may be selectively activated by the activation module 128. The eye gaze direction of the user may be used control activation of the text editing function 129 for at least some portions of the text. The text editing function 129 may be responsive to the eye gaze direction and may allow a user to select from among several possible edit actions by eye gaze direction based control.

In any one of the portable electronic equipments and methods, the gaze tracking device may be started in a conventional manner, e.g. by a dedicated user input or automatically at start up.

In any one of the portable electronic equipments and methods, the gaze tracking device may be started to track the eye gaze direction selectively only in response to an output of the speech to text conversion module. For illustration, the gaze tracking device may be triggered to operate when a pre-defined number of errors are identified in the speech to text conversion. The errors may be words which cannot be assigned to a dictionary word and/or words for which there is an ambiguity which requires disambiguation. The pre-defined number of errors may be one error. The pre-defined number of errors may be greater than one, so that eye gaze based control of the text editing function is started selectively only when several errors may need to be corrected.

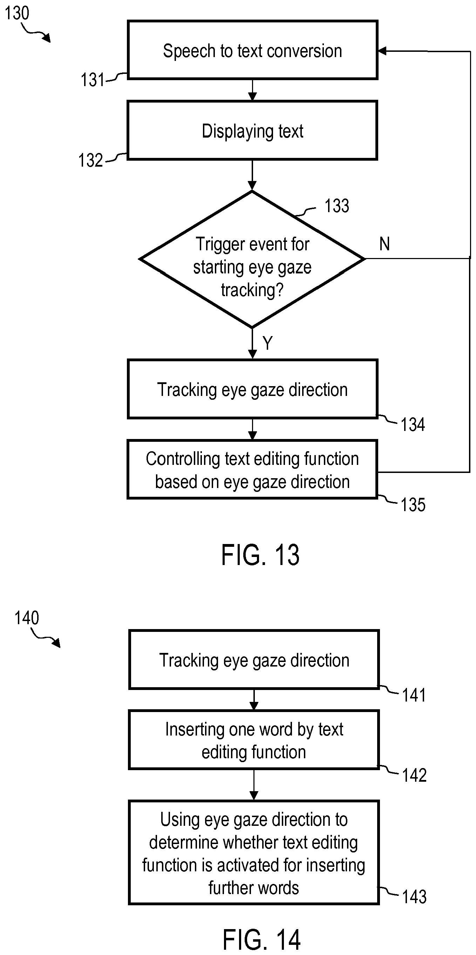

FIG. 13 is a flow chart of a method 130 according to an embodiment. The method 130 may be performed by the portable electronic equipment according to an embodiment.

In the method 130, speech to text conversion is performed at 131. The generated text is displayed at 132. These steps may be implemented in accordance with any one of the techniques described with reference to FIG. 1 to FIG. 12 above.

At 133, it is determined whether a trigger event for activating the gaze tracking device is fulfilled. The trigger event may depend on an output of the speech to text conversion. The trigger event may depend on a number of potential errors and/or misinterpretations identified by the speech to text conversion module. If the trigger event is not detected, the speech to text conversion is continued at 131.

At 134, if the trigger event is detected at 133, the gaze tracking device is activated to track the eye gaze direction. At 135, the text editing function may be selectively activated and controlled based on the tracked eye gaze direction. The tracking of the eye gaze direction and the control of the text editing function based on the tracked eye gaze direction may be implemented in accordance with any one of the techniques described with reference to FIG. 1 to FIG. 12 above. The speech to text conversion may be continued at 131.

Controlling the activation of the text editing function may include determining whether only one or more than one word is to be inserted into the text. This decision on whether one or more than one word is to be inserted into the text may be controlled based on the eye gaze direction in any one of the various embodiments, as will be described with reference to FIG. 14 to FIG: 16.

FIG. 14 is a flow chart of a method 140 according to an embodiment. The method 140 may be performed by the portable electronic equipment according to an embodiment. In the method 140, the eye gaze direction may be used to determine whether only one word or more than one word are inserted into the text, with the determination being controlled by the eye gaze direction.

At 141, a gaze tracking device tracks the eye gaze direction.

At 142, one word is inserted into the text generated by speech to text conversion using a text editing function. The text editing function may be activated based on the eye gaze direction or may even be activated by touch for inserting this word.

At 143, the eye gaze direction is used to determine whether at least one further word is to be inserted. For illustration, the user may continue to insert words at a selected location in the text by directing the eye gaze onto certain regions of the display. The user may continue to insert words at the selected location by continuing his dictation when his eye gaze remains generally directed towards the location at which the words are to be inserted. Because the gaze point may wander over the display with a high speed, the fact that the gaze point leaves the region where words are inserted by continued dictation does not necessarily mean that inserting more than one word at the selected location is terminated.

By using the eye gaze direction for controlling whether the text editing function is activated for inserting only one word or for inserting more than one word, Midas problems may be mitigated.

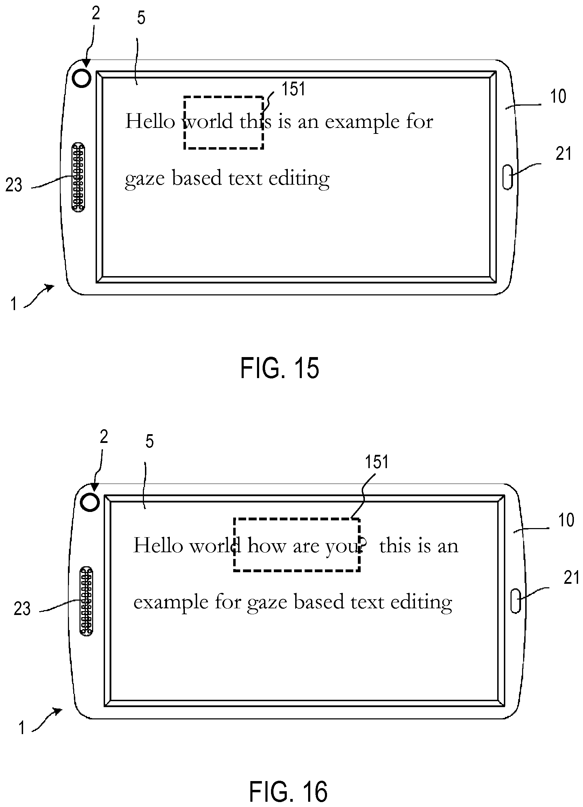

FIG. 15 and FIG. 16 are views illustrating operation of the portable electronic equipment according to an embodiment in which the eye gaze direction may be used for controlling whether the text editing function is activated for inserting only one word or for inserting more than one word. The text editing function may be activated for a region 151 on the display. The activation may be done by eye gaze, as described above, or even by touch. The user may dictate one word. If the dwell time of the user's eye gaze on the region 151 meets a pre-defined criterion, the user may continue to dictate words for insertion at the selected location in the text. The user's eye gaze does not need to be permanently fixed onto the region 151. The criterion used for determining whether the user may continue to insert further words may allow the user's eye gaze direction to leave the region 151. The size and/or position of the region 151 may also be adapted as the user continues to insert more words at the same location in the original text.

While portable electronic equipments and methods of controlling portable electronic equipments have been described with reference to the drawings, modifications and alterations may be implemented in further embodiments. For illustration rather than limitation, while exemplary implementations for gaze tracking devices have been described, other or additional sensor componentry may be used. For illustration, a dedicated sensor may be provided for tracking the eye gaze direction. The dedicated sensor may be an infrared sensor which detects reflections of infrared light to establish the eye gaze direction. The gaze tracking device may, but does not need to be a sensor which is sensitive in the visible spectral range.

For further illustration, while the portable electronic equipment may be a hand-held device or a head-mounted device, the portable electronic equipment may also have other configurations.

Examples for portable electronic equipments which may be configured as described herein include, but are not limited to, a mobile phone, a cordless phone, a personal digital assistant (PDA), a head mounted display, and the like.

Although the invention has been shown and described with respect to certain preferred embodiments, equivalents and modifications will occur to others skilled in the art upon the reading and understanding of the specification. The present invention includes all such equivalents and modifications, and is limited only by the scope of the following claims.

## Claims

1. A portable electronic equipment, comprising:
a speech to text conversion module (3; 123) configured to generate a text by performing a speech to text conversion;
a gaze tracking device (2; 121, 122) configured to track an eye gaze direction of a user on a display (5) on which the text is displayed; and
a text editing function (92; 129) configured to allow the user to edit the text;
the portable electronic equipment (1; 91; 101; 111) being configured to selectively activate the text editing function (92; 129) based on the tracked eye gaze direction;
wherein the portable electronic equipment (1; 91; 101; 111) is configured to assign a numerical value to each one of several portions of the text based on the speech to text conversion and to selectively activate the text editing function (92; 129) for editing a portion of the text selected from the several portions, the portion being determined based on the assigned numerical values and based on the tracked eye gaze direction;
wherein the portable electronic equipment (1; 91; 101; 111) is configured to assign the numerical value to respectively each one of several words of the text based on a speech to text conversion accuracy;
wherein the portable electronic equipment (1; 91; 101; 111) is configured such that a dwell time of the monitored eye gaze direction on an activation area (41; 71-73) associated with a word (42) triggers the text editing function (92; 129) for editing the word (42); and
wherein the portable electronic equipment (1; 91; 101; 111) is configured to set a size of the activation area (41; 71-73) in dependence on the speech to text conversion accuracy;
**characterized in that**
the portable electronic equipment (1; 91; 101; 111) is configured to set a threshold for the dwell time associated with the word (42) at which the text editing function (92; 129) is triggered in dependence on the speech to text conversion accuracy associated with the word (42).

2. The portable electronic equipment of claim 1,
wherein the portable electronic equipment (1; 91; 101; 111) is configured to determine the portion for which the text editing function (92; 129) is activated based on the assigned numerical values and based on a heat map for the eye gaze direction.

3. The portable electronic equipment of claim 1 or claim 2,
wherein the portable electronic equipment (1; 91; 101; 111) is configured to assign the numerical value to respectively each one of several interword spaces (52, 54).

4. The portable electronic equipment of claim 3,
wherein the numerical value assigned to respectively each one of the several interword spaces indicates at which ones of the several interword spaces (52, 54) a punctuation mark is expected to be located.

5. The portable electronic equipment of claim 3 or claim 4,
wherein the portable electronic equipment (1; 91; 101; 111) is configured such that a dwell time of the monitored eye gaze direction on an activation area (51, 53; 71-73) associated with an interword space (52, 54) triggers the text editing function (92; 129) for editing the interword space (52, 54),
wherein the portable electronic equipment (1; 91; 101; 111) is configured to set a size of the activation area (51, 53; 71-73) in dependence on a likelihood that a special character is to be inserted at the interword space.

6. The portable electronic equipment of claim 5,
wherein the portable electronic equipment (1; 91; 101; 111) is configured to set the size of the activation area (51, 53; 71-73) such that the size of the activation area is larger than the interword space (52, 54).

7. The portable electronic equipment of any one of the preceding claims, wherein the gaze tracking device (2; 121, 122) comprises a camera (11).

8. The portable electronic equipment of claim 7,
wherein the speech to text conversion module (3; 123) is coupled to the camera (11) and is configured to generate the text by speech to text conversion based on images captured by the camera (11).

9. The portable electronic equipment of any one of the preceding claims, further comprising:
a microphone (21) or an Electromyography sensor (103) configured to capture speech signals,
wherein the speech to text conversion module (3; 123) is configured to generate the text by speech to text conversion of the captured speech signals.

10. The portable electronic equipment of any one of the preceding claims, wherein the portable electronic equipment (1; 91; 101; 111) is configured to selectively activate the gaze tracking device (2; 121, 122) in response to an error detection performed by the speech to text conversion module (3; 123).

11. The portable electronic equipment of any one of the preceding claims, wherein the portable electronic equipment (1; 91; 101; 111) is configured to determine based on the tracked eye gaze direction whether the text editing function (92; 129) is activated for inserting only one word or whether the text editing function (92; 129) is activated for inserting a plurality of words.

12. A method of operating a user interface of a portable electronic equipment, the method comprising:
performing, by a speech to text conversion module (3; 123), a speech to text conversion to generate a text;
tracking, by a gaze tracking device (2; 121, 122), an eye gaze direction of a user on a display on which the text is displayed; and
selectively activating a text editing function (92; 129) based on the tracked eye gaze direction to allow the user to edit the text;
assigning a numerical value to each one of several portions of the text based on the speech to text conversion,
wherein the text editing function (92; 129) is selectively activated for editing a portion which is determined based on the assigned numerical values and based on the tracked eye gaze direction; and
wherein the numerical value is assigned to respectively each one of several words (42) of the text based on a speech to text conversion accuracy; the method further comprising:
setting a size of an activation area (41; 71-73) associated with a word (42) in dependence on a speech to text conversion accuracy,
wherein the text editing function (92; 129) is selectively activated for editing the word (42) based on a dwell time of the tracked eye gaze direction on the activation area (41; 71-73);
**characterized by** further comprising
setting a threshold for the dwell time associated with the word (42) at which the text editing function (92; 129) is triggered in dependence on the speech to text conversion accuracy associated with the word (42).

13. The method of any claim 12,
wherein the numerical value is assigned to respectively each one of several interword spaces (52, 54) of the text.

14. The method of claim 13, further comprising:
setting a size of an activation area (51, 53; 71-73) associated with an interword space (52, 54) in dependence on a likelihood that a special character is to be inserted at the interword space (52, 54),
wherein the text editing function (92; 129) is selectively activated for editing the interword space (52, 54) based on a dwell time of the tracked eye gaze direction on the activation area (51, 53, 71-73) associated with the interword space (52, 54).

## Patentansprüche

1. Portables elektronisches Gerät, umfassend:
ein Sprache-zu-Text-Konversionsmodul (3; 123), welches dazu eingerichtet ist, einen Text durch Ausführen einer Sprache-zu-Text-Konversion zu generieren;
eine Blickerkennungs-Einrichtung (2; 121, 122), welche dazu eingerichtet ist, eine Augen-Blickrichtung eines Benutzers auf einer Anzeige (5), auf welcher der Text angezeigt wird, zu verfolgen; und
eine Textbearbeitungsfunktion (92; 129), welche dazu eingerichtet ist, dem Benutzer ein Bearbeiten des Textes zu ermöglichen;
wobei das portable elektronische Gerät (1; 91; 101; 111) dazu eingerichtet ist, die Textbearbeitungsfunktion (92; 19) auf Grundlage der verfolgten Augen-Blickrichtung selektiv zu aktivieren;
wobei das portable elektronische Gerät (1; 91; 101; 111) dazu eingerichtet ist, einem jeden von mehreren Abschnitten des Textes auf Grundlage der Sprache-zu-Text-Konversion einen numerischen Wert zuzuweisen und die Textbearbeitungsfunktion (92; 129) zum Bearbeiten eines Abschnitts des aus den mehreren Abschnitten ausgewählten Textes selektiv zu aktivieren, wobei der Abschnitt auf Grundlage des zugewiesenen numerischen Wertes und auf Grundlage der verfolgten Augen-Blickrichtung bestimmt wird;
wobei das portable elektronische Gerät (1; 91; 101; 111) dazu eingerichtet ist, einem jeden von mehreren Worten des Textes auf Grundlage einer Sprache-zu-Text-Konversionsgenauigkeit einen jeweiligen numerischen Wert zuzuweisen;
wobei das portable elektronische Gerät (1; 91; 101; 111) so eingerichtet ist, dass eine Verweilzeit der überwachten Augen-Blickrichtung in einem mit einem Wort (42) verknüpften Aktivierungsbereich (41; 71-73) die Textbearbeitungsfunktion (92; 129) zum Bearbeiten des Wortes (42) auslöst; und
wobei das portable elektronische Gerät (1; 91; 101; 111) dazu eingerichtet ist, eine Größe des Aktivierungsbereiches (41; 71-73) in Abhängigkeit von der Sprache-zu-Text-Konversionsgenauigkeit festzulegen;
**dadurch gekennzeichnet, dass**
das portable elektronische Gerät (1; 91; 101; 111) dazu eingerichtet ist, eine Schwelle für die mit dem Wort (42) verknüpfte Verweilzeit festzulegen, bei welcher die Textbearbeitungsfunktion (92; 129) in Abhängigkeit von der mit dem Wort (42) verknüpften Sprache-zu-Text-Konversionsgenauigkeit ausgelöst wird.

2. Portables elektronisches Gerät gemäß Anspruch 1,
wobei das portable elektronische Gerät (1; 91; 101; 111) dazu eingerichtet ist, den Abschnitt, für welchen die Textbearbeitungsfunktion (92; 129) aktiviert wird, auf Grundlage der zugewiesenen numerischen Werte und auf Grundlage einer Heat Map für die Augen-Blickrichtung festzulegen.

3. Portables elektronisches Gerät gemäß Anspruch 1 oder Anspruch 2,
wobei das portable elektronische Gerät (1; 91; 101; 111) dazu eingerichtet ist, einem jeden von mehreren Wortzwischenräumen (52, 54) einen jeweiligen numerischen Wert zuzuweisen.

4. Portables elektronisches Gerät gemäß Anspruch 3,
wobei der einem jeden der mehreren Wortzwischenräume jeweils zugewiesene Wert anzeigt, an welchen der mehreren Wortzwischenräume (52, 54) sich voraussichtlich ein Satzzeichen befindet.

5. Portables elektronisches Gerät gemäß Anspruch 3 oder Anspruch 4,
wobei das portable elektronische Gerät (1; 91; 101; 111) so eingerichtet ist, dass eine Verweilzeit der überwachten Augen-Blickrichtung in einem mit einem Wortzwischenraum (52, 54) verknüpften Aktivierungsbereich (51, 53; 71-73) die Textbearbeitungsfunktionen (92; 129) zum Bearbeiten des Wortzwischenraumes (52, 54) auslöst,
wobei das portable elektronische Gerät (1; 91; 101; 111) dazu eingerichtet ist, eine Größe des Aktivierungsbereiches (51, 53; 71-73) in Abhängigkeit einer Wahrscheinlichkeit festzulegen, dass ein Sonderzeichen in dem Wortzwischenraum einzusetzen ist.

6. Portables elektronisches Gerät gemäß Anspruch 5,
wobei das portable elektronische Gerät (1; 91; 101; 111) dazu eingerichtet ist, die Größe des Aktivierungsbereiches (51, 53; 71-73) so festzulegen, dass die Größe des Aktivierungsbereiches größer ist als der Wortzwischenraum (52, 54).

7. Portables elektronisches Gerät gemäß einem jeden der vorhergehenden Ansprüche, wobei die Blickerkennungs-Einrichtung (2; 121, 122) eine Kamera (11) umfasst.

8. Portables elektronisches Gerät gemäß Anspruch 7,
wobei das Sprache-zu-Text-Konversionsmodul (3; 123) mit der Kamera (11) gekoppelt ist uns dazu eingerichtet ist, den Text durch Sprache-zu-Text-Konversion auf Grundlage von durch die Kamera (11) erfassten Bildern zu erzeugen.

9. Portables elektronisches Gerät gemäß einem jeden der vorhergehenden Ansprüche, ferner umfassend:
ein Mikrofon (21) oder einen Elektromyographie-Sensor (103), welche jeweils dazu eingerichtet sind, Sprachsignale zu erfassen,
wobei das Sprache-zu-Text-Konversionsmodul (3; 123) dazu eingerichtet ist, den Text durch Sprache-zu-Text-Konversion des erfassten Sprachsignals zu erzeugen.

10. Portables elektronisches Gerät gemäß einem jeden der vorhergehenden Ansprüche, wobei das portable elektronische Gerät (1; 91; 101; 111) dazu eingerichtet ist, die Blickerkennungs-Einrichtung (2; 121, 122) in Antwort auf eine durch das Sprache-zu-Text-Konversionsmodul (3; 123) durchgeführte Fehlererkennung selektiv zu aktivieren.

11. Portables elektronisches Gerät gemäß einem jeden der vorhergehenden Ansprüche, wobei das portable elektronische Gerät (1; 91; 101; 111) dazu eingerichtet ist, auf Grundlage der verfolgten Augen-Blickrichtung festzulegen, ob die Textbearbeitungsfunktion (92; 129) zum Einfügen nur eines Wortes aktiviert wird oder ob die Textbearbeitungsfunktion (92; 129) zum Einfügen einer Mehrzahl von Worten aktiviert wird.

12. Verfahren zum Betreiben einer Benutzerschnittstelle eines portablen elektronischen Geräts, wobei das Verfahren umfasst:
Durchführen, durch ein Sprache-zu-Text-Konversionsmodul (3; 123), einer Sprache-zu-Text-Konversion zum erzeugen eines Textes;
Verfolgen, durch eine Blickerkennungs-Einrichtung (2; 121, 122), eine Augen-Blickrichtung eines Benutzers auf einer Anzeige, auf welcher der Text angezeigt wird; und
selektives Aktivieren einer Textbearbeitungsfunktion (92; 129) auf Grundlage der verfolgten Augen-Blickrichtung, um dem Benutzer ein Bearbeiten des Textes zu ermöglichen;
Zuweisen eines numerischen Wertes an einen jeden von mehreren Abschnitten des Textes auf Grundlage der Sprache-zu-Text-Konversion,
wobei die Textbearbeitungsfunktion (92; 129) selektiv aktiviert wird zum Bearbeiten eines Abschnitts, welcher auf Grundlage der zugewiesenen numerischen Werte und auf Grundlage der verfolgten Augen-Blickrichtung festgelegt wird; und
wobei einem jeden von mehreren Worten (42) des Textes auf Grundlage einer Sprache-zu-Text-Konversionsgenauigkeit ein jeweiliger numerischer Wert zugewiesen wird;
wobei das Verfahren ferner umfasst:
Setzen einer Größe eines mit einem Wort (42) verknüpften Aktivierungsbereiches (41; 71-73) in Abhängigkeit von einer Sprache-zu-Text-Konversionsgenauigkeit,
wobei die Textbearbeitungsfunktion (92; 129) selektiv auf Grundlage einer Verweilzeit der verfolgten Augen-Blickrichtung in dem Aktivierungsbereich (41; 71-73) zum Bearbeiten des Wortes (42) aktiviert wird;
**dadurch gekennzeichnet, dass** das Verfahren ferner umfasst
Setzen einer Schwelle für die mit dem Wort (42) verknüpfte Verweilzeit, an welcher die Textbearbeitungsfunktion (92; 129) in Abhängigkeit von der mit dem Wort (42) verknüpften Sprache-zu-Text-Konversionsgenauigkeit ausgelöst wird.

13. Verfahren gemäß Anspruch 12,
wobei einem jeden der mehreren Wortzwischenräume (52, 54) des Textes der jeweilige numerische Wert zugewiesen wird.

14. Verfahren gemäß Anspruch 13, ferner umfassend:
setzen eine Größe eines mit einem Wortzwischenraum (52, 54) verknüpften Aktivierungsbereiches (51, 53; 71-73) in Abhängigkeit von einer Wahrscheinlichkeit, dass ein Sonderzeichen in dem Wortzwischenraum (52, 54) einzusetzen ist,
wobei die Textbearbeitungsfunktion (92; 129) selektiv auf Grundlage einer Verweilzeit der verfolgten Augen-Blickrichtung in dem mit dem Wortzwischenraum (52, 54) verknüpften Aktivierungsbereich (51, 53, 71-73) zum Bearbeiten des Wortzwischenraums (52, 54) aktiviert wird.

## Revendications

1. Équipement électronique portable, comprenant :
un module de conversion voix-texte (3 ; 123) configuré pour produire un texte en réalisant une conversion voix-texte ;
un dispositif de suivi de mouvements oculaires (2 ; 121 ; 122) configuré pour suivre une direction de mouvements oculaires d'un utilisateur sur un affichage (5) sur lequel le texte est affiché ; et
une fonction de mise en forme de texte (92 ; 129) configurée pour permettre à l'utilisateur de mettre le texte en forme ;
l'équipement électronique portable (1 ; 91 ; 101 ; 111) étant configuré pour activer sélectivement la fonction de mise en forme de texte (92 ; 129) sur la base de la direction de mouvements oculaires suivie ;
l'équipement électronique portable (1 ; 91 ; 101 ; 111) étant configuré pour assigner une valeur numérique à chaque partie de plusieurs parties du texte sur la base de la conversion voix-texte et à activer sélectivement la fonction de mise en forme de texte (92 ; 129) pour mettre en forme une partie du texte sélectionnée à partir des plusieurs parties, la partie étant déterminée sur la base des valeurs numériques assignées et sur la base de la direction de mouvements oculaires suivie ;
l'équipement électronique portable (1 ; 91 ; 101 ; 111) étant configuré pour assigner la valeur numérique à respectivement chaque mot de plusieurs mots du texte sur la base d'une précision de conversion voix-texte ;
l'équipement électronique portable (1 ; 91 ; 101 ; 111) étant configuré de manière qu'un temps de maintien de la direction de mouvements oculaires contrôlée sur une zone d'activation (41 ; 71-73) associée à un mot (42) déclenche la fonction de mise en forme de texte (92 ; 129) pour mettre en forme le mot (42) ; et
l'équipement électronique portable (1 ; 91 ; 101 ; 111) étant configuré pour définir une dimension de la zone d'activation (41 ; 71-73) en fonction de la précision de conversion voix-texte ;
l'équipement électronique portable (1 ; 91 ; 101 ; 111) étant **caractérisé en ce qu'**il est configuré pour définir un seuil pour le temps de maintien associé au mot (42) auquel la fonction de mise en forme de texte (92 ; 129) est déclenchée en fonction de la précision de conversion voix-texte associée au mot (42).

2. Équipement électronique portable selon la revendication 1, l'équipement électronique portable (1 ; 91 ; 101 ; 111) étant configuré pour déterminer la partie pour laquelle la fonction de mise en forme de texte (92 ; 129) est activée sur la base des valeurs numériques assignées et sur la base d'une carte thermique pour la direction de mouvements oculaires.

3. Équipement électronique portable selon la revendication 1 ou la revendication 2, l'équipement électronique portable (1 ; 91 ; 101 ; 111) étant configuré pour assigner la valeur numérique à respectivement chaque espace de plusieurs espaces entre les mots (52, 54).

4. Équipement électronique portable selon la revendication 3, dans lequel la valeur numérique assignée à respectivement chaque espace des espaces entre les mots indique à quels espaces entre les mots (52, 54) un signe de ponctuation doit être placé.

5. Équipement électronique portable selon la revendication 3 ou la revendication 4,
l'équipement électronique portable (1 ; 91 ; 101 ; 111) étant configuré de manière qu'un temps de maintien de la direction de mouvements oculaires contrôlée sur une zone d'activation (51, 53 ; 71-73) associée à un espace entre les mots (52, 54) déclenche la fonction de mise en forme de texte (92 ; 129) pour mettre en forme l'espace entre les mots (52, 54),
l'équipement électronique portable (1 ; 91 ; 101 ; 111) étant configuré pour définir une dimension de la zone d'activation (51, 53 ; 71-73) en fonction d'une vraisemblance qu'un caractère spécial doive être inséré à l'espace entre les mots.

6. Équipement électronique portable selon la revendication 5, l'équipement électronique portable (1 ; 91 ; 101 ; 111) étant configuré pour définir la dimension de la zone d'activation (51, 53 ; 71-73) de manière que la dimension de la zone d'activation soit plus grande que l'espace entre les mots (52, 54).

7. Équipement électronique portable selon l'une quelconque des revendications précédentes, dans lequel le dispositif de suivi de mouvements oculaires (2 ; 121 ; 122) comprend une caméra (11).

8. Équipement électronique portable selon la revendication 7, dans lequel le module de conversion voix-texte (3 ; 123) est accouplé à la caméra (11) et est configuré pour produire le texte par conversion voix-texte sur la base d'images capturées par la caméra (11).

9. Équipement électronique portable selon l'une quelconque des revendications précédentes, comprenant, en outre :
un microphone (21) ou un capteur d'électromyographie (103) configuré pour capturer des signaux de voix,
le module de conversion voix-texte (3 ; 123) est configuré pour produire le texte par conversion voix-texte des signaux de voix capturés.

10. Équipement électronique portable selon l'une quelconque des revendications précédentes, l'équipement électronique portable (1 ; 91 ; 101 ; 111) étant configuré pour activer sélectivement le dispositif de suivi de mouvements oculaires (2 ; 121 ; 122) en réponse à une détection d'erreur réalisée par le module de conversion voix-texte (3 ; 123).

11. Équipement électronique portable selon l'une quelconque des revendications précédentes, l'équipement électronique portable (1 ; 91 ; 101 ; 111) étant configuré pour déterminer, sur la base de la direction de mouvements oculaires suivis, si la fonction de mise en forme de texte (92 ; 129) est activée pour insérer un seul mot ou si la fonction de mise en forme de texte (92 ; 129) est activée pour insérer une pluralité de mots.

12. Procédé pour actionner une interface utilisateur d'un équipement électronique portable, le procédé consistant à :
réaliser, par un module de conversion voix-texte (3 ; 123), une conversion voix-texte pour produire un texte ;
suivre, par un dispositif de suivi de mouvements oculaires (2 ; 121 ; 122) une direction de mouvements oculaires d'un utilisateur sur un affichage sur lequel le texte est affiché ; et
activer sélectivement une fonction de mise en forme de texte (92 ; 129) sur la base de la direction de mouvements oculaires suivie afin de permettre à l'utilisateur de mettre en forme le texte ;
assigner une valeur numérique à chaque partie d'une pluralité de parties du texte sur la base de la conversion voix-texte,
dans lequel la fonction de mise en forme de texte (92 ; 129) est activée sélectivement pour mettre en forme une partie qui est déterminée sur la base des valeurs numériques assignées et sur la base de la direction de mouvements oculaires suivie ; et
dans lequel la valeur numérique est assignée à respectivement chaque mot de plusieurs mots (42) du texte sur la base d'une précision de conversion voix-texte ;
le procédé consistant, en outre, à :
définir une dimension d'une zone d'activation (41 ; 71-73) associée à un mot (42) en fonction d'une précision de conversion voix-texte,
dans lequel la fonction de mise en forme de texte (92 ; 129) est activée sélectivement pour mettre en forme le mot (42) sur la base d'un temps de maintien de la direction de mouvements oculaires suivie sur la zone d'activation (41 ; 71-73) ;
le procédé étant **caractérisé en ce qu'**il consiste à :
définir un seuil pour le temps de maintien associé au mot (42) auquel la fonction de mise en forme de texte (92 ; 129) est déclenchée en fonction de la précision de conversion voix-texte associée au mot (42).

13. Procédé selon la revendication 12, dans lequel la valeur numérique est assignée à respectivement chaque espace de plusieurs espaces entre les mots (52, 54) du texte.

14. Procédé selon la revendication 13, consistant, en outre, à :
définir une dimension d'une zone d'activation (51, 53 ; 71-73) associée à un espace entre les mots (52, 54) en fonction d'une vraisemblance qu'un caractère spécial doive être inséré à l'espace entre les mots (52, 54),
dans lequel la fonction de mise en forme de texte (92 ; 129) est activée sélectivement pour mettre en forme l'espace entre les mots (52, 54) sur la base d'un temps de maintien de la direction de mouvements oculaires suivie sur la zone d'activation (51, 53, 71-73) associée à l'espace entre les mots (52, 54).
